# EUROPEAN PATENT SPECIFICATION

(11) **EP 2 975 856 B1**
(45) Date of publication and mention of the grant of the patent: **02.09.2020**
(21) Application number: 15176459.4
(22) Date of filing: 13.07.2015
(51) Int. Cl.: H04Q 9/00, G06K 7/10

(54) **CYBER SECURED AIRGAP REMOTE MONITORING AND DIAGNOSTICS INFRASTRUCTURE**
FERNÜBERWACHUNGS- UND -DIAGNOSEINFRASTRUKTUR MIT CYBERGESCHÜTZTEM AIRGAP
SURVEILLANCE À DISTANCE D'ENTREFER SÉCURISÉ ÉLECTRONIQUE ET INFRASTRUCTURE DE DIAGNOSTIC

(30) Priority: 14.07.2014 US 201414330720
(43) Date of publication of application: 20.01.2016
(73) Proprietor: General Electric Company, Schenectady, NY 12345 (US)
(72) Inventor: RAO, Kutesh Kummamuri, Houston, TX 77015 (US); KRUEGER, Matthew Thomas, Houston, TX 77015 (US)
(74) Representative: BRP Renaud & Partner mbB Rechtsanwälte Patentanwälte Steuerberater

(56) References cited:
- EP-A1- 1 757 222
- EP-A1- 2 908 096
- WO-A1-2013/046231
- JP-A- 2006 178 601
- US-A1- 2009 277 266
- US-A1- 2013 032 634
- US-A1- 2013 279 699

## Description

### BACKGROUND OF THE INVENTION

The subject matter disclosed herein relates to remote monitoring and diagnostics, and more specifically, to a system and method for transferring data between separate networks to enable remote monitoring and diagnostics.

In remote monitoring and diagnostics, a diagnostic center at a remote location is connected to a customer location via a network. The diagnostic center obtains data from the customer location over the network. The data is generally related to a device at the customer location, such as a turbine. Operators at the remote location receive and monitor the data in order to diagnose the condition or operation of the device. This arrangement provides customer service without intrusive on-site visits and/or scheduled maintenance shutdowns, etc. However, having a network connection between the customer location and the diagnostics center exposes the customer location to the possibility of viruses from the remote location and/or undesired access or hacking from malevolent individuals who have gained access to the remote location. Potential customers can be hesitant to enter into a remote monitoring and diagnostics arrangement that carries such risks.

EP 1757222 A1 relates to the gathering of medical data such as blood glucose measurements from patients using transformation of the measurement data into visual data, such as a QR code for transmission to a medical establishment.

WO 2013/046231 A1 relates to the use of a QR code in a monitoring application.

JP 2006 178601 A relates to mailing of image data representing encrypted computer failure data to a helpdesk from a camera phone.

US 2013/032634 A1 relates to creating a barcode data from user information, such as exercise information, and uploading bar code data by scanning the bar code with a mobile phone.

### BRIEF DESCRIPTION OF THE INVENTION

Aspects of the invention are defined by the accompanying claims.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
Figure 1 shows a system for remote monitoring and diagnostics of a device 106 according to one embodiment of the present disclosure; and
Figure 2 shows a flowchart illustrating a method of remote monitoring and diagnosis of a device.

The detailed description explains embodiments of the invention, together with advantages and features, by way of example with reference to the drawings.

### DETAILED DESCRIPTION OF THE INVENTION

The present disclosure provides a system and method of remote monitoring and diagnosis of a device at a customer location that inhibits or reduces security risks of a remote location from affecting the customer location, such as reducing the possibility of the customer location receiving viruses and/or hacking from the remote location. The system includes a first network at the customer location and a second network at the remote location that is separate from the first network. Data is transmitted from the first network to the second network via a non-network connection or non-network medium. In one embodiment, the non-network medium may be an optical medium such that data displayed at an interface of the first network is read by an optical scanner of the second network. In another embodiment, the non-network medium is an acoustic medium such that the data is transmitted by the first network as an acoustic signal and received at the second network using an acoustic receiver, such as a microphone. In various aspects, the non-network medium employs an air gap that separates or isolates the first network from the second network so that data is not transmittable from the second network to the first network and the first network, thereby protecting the first network from security risks of the second network.

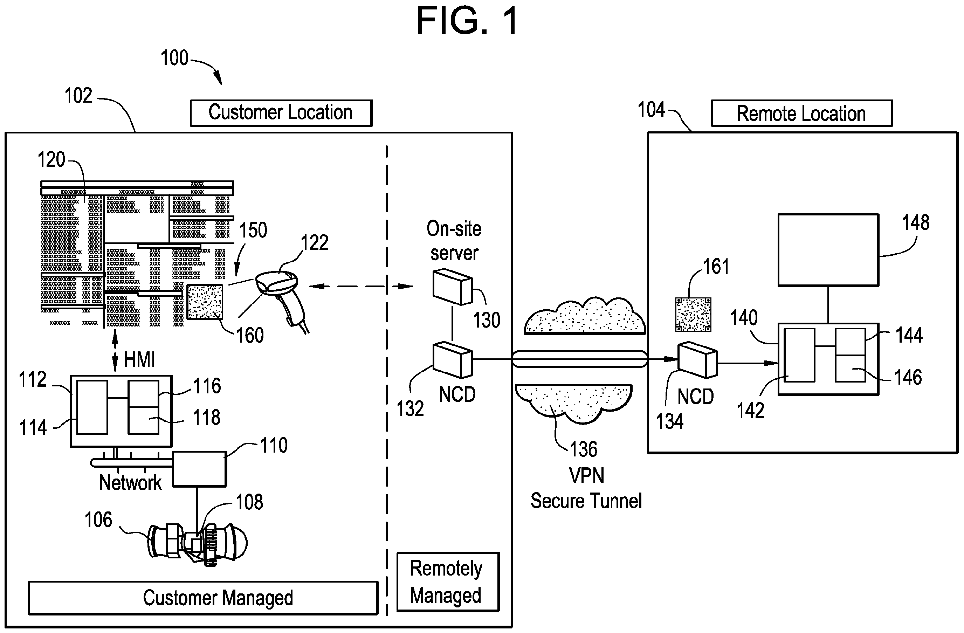

Figure 1 shows a system 100 for remote monitoring and diagnostics of a device 106 according to one embodiment of the present disclosure. The system 100 includes a customer location 102 that includes the device 106 and a remote location 104 that provides various diagnostics services based on measurements obtained with respect to the device 106. In one embodiment, the device 106 is a turbine for providing energy or power. A sensor 108 disposed on the device 106 measures a value of a parameter of the device 106, such as air pressure, temperature, etc. The sensor 108 is coupled via a local network 110 to a control unit 112 which may be a server, mainframe computer, desktop computer, laptop computer, tablet, etc. The sensor 108 provides the measured values of the parameter of the device 106 to the control unit 112 over the local network 110. The control unit 112 can include a processor 114 and a memory storage device 116 that includes programs 118 stored therein. In various embodiments, the memory storage device 116 includes a non-transitory storage device, such as a solid-state memory device or RAM. The processor 114 receives the measured values of the parameter from the sensor 108 and encrypts the measured values to generate an encrypted code 160. Programs 118 can provide instructions to the processor 114 for encrypting the measured values. In one embodiment, the processor 114 can store the measured values of the parameter and/or the encrypted code 160 at the memory storage device 116. Alternatively, the processor 114 can display the measured values and/or the encrypted code 160 at a human-machine interface ("interface") 120 as a visual signal. In various embodiments, the encrypted code 160 is displayed as a two-dimensional visual code, such as a QR code known in the art.

While the invention is described with respect to a single sensor 108, it is to be understood that a plurality of sensors may be used to measure values of various parameters of the device 106. In addition, the processor 114 can use some or all of the measured values from the plurality of sensors when generating the encrypted code 160.

In various embodiments, the sensor 108 measures the values of the parameter and sends the measured values to the processor 114 at a selected sampling rate (e.g., every 5 seconds). The sampling rate may be controlled or selected by the processor 114. When the values are received, the processor 114 generates the encrypted code 160 from the value and displays the encrypted code 160 at the interface 120. Thus, the encrypted code is generated dynamically at the interface 120 and is refreshed or replaced at the interface 120 at a selected time interval (refresh rate) that can correspond to the sampling rate (e.g., every 5 seconds).

The customer location 102 further includes a detector 122. The detector 122 can be coupled to a diagnostic unit 140 at the remote location 104. The detector 122 reads the encrypted code 160 from the interface 120 to obtain a copy 161 of the encrypted code 160. The detector 122 then sends the copy 161 of the encrypted code 160 to the diagnostic unit 140 at the remote location 104.

The detector 122 can be connected to the remote location 104 via a continuous network connection or a non-continuous network connection. In an embodiment with a continuous network connection, the detector 122 can be coupled to an on-site server 130 that can be remotely managed from the remote location 104. The on-site server 130 is further coupled to a network connectivity device 132 at the customer location 102 that communicates with a network connectivity device 134 at the remote location 104 over a network connection 136. In an embodiment with a non-continuous network connection, the detector 122 can store the encrypted code 160 at a memory location within the detector 122. The detector 122 can then be retrieved to the remote location 104 and plugged into the remote location 104 for downloading of the encrypted code 160 from the detector 122. In another embodiment of a non-continuous network, the detector 122 or the remote location 104 can initiate a temporary communication channel and transfer the encrypted code 160 from the detector 122 to the remote location 104 over the temporary communication channel.

In one embodiment, the encrypted code 160 is read from the interface 120 and into the detector 122 over an optical medium. In this embodiment, the encrypted code 160 is displayed visually at the interface 120, and the detector 122 is an optical scanner that reads the visually-displayed code. The encrypted code 160 can be displayed at a designated location of the interface 120 such as a lower right corner of the interface 120 as shown in Figure 1. The optical scanner may be placed in front of the interface 120 and directed at the encrypted code 160. The optical scanner may be programmed so as to read the encrypted code 160 at a given sampling rate corresponds to the refresh rate of the encrypted code 160 at the interface 120. In another embodiment, the encrypted code 160 is generated as an acoustic signal at the interface 120 or at a speaker of the interface 120 and the detector 122 is an acoustic receiver, such as a microphone, etc. In this embodiment, an acoustic medium is used to transfer the encrypted code 160 from the interface 120 to the detector 122. Therefore, the detector 122 can be an optical scanner or a microphone, depending on the selected medium. Additionally, the detector 122 can be a smartphone or a tablet computer or other device suitable for reading data over the selected medium.

In various embodiments, the interface 120 and detector 122 are separated by an air gap or other non-network medium 150 that separates and/or isolates a first network of the customer location 102 from a second network of the remote location 104.

Additionally, the interface 120 and detector 122 provide communication in only one direction across the air gap, i.e., from the customer location 102 to the remote location 104. Thus, the remote location 104 can receive measurements or data from the customer location 102 that may be used for diagnostics of the device 106 at the customer location 102, without providing access from the remote location 104 to the customer location 102. The non-network medium 150 isolates the local network 110 and control unit 112 of the customer location 102 from the remote location 104. Therefore, the customer location 102 avoids being susceptible to security risks at the remote location 104, such as the risk of receiving viruses or other undesired access from the remote location 104.

The remote location includes a diagnostic unit 140 that includes a processor 142, memory storage device 144 and programs 146. In one embodiment, the processor 142 of the diagnostic unit 140 uses the programs 146 to perform a decoding operation to decode the copy 161 of the encrypted code 160, thereby obtaining the measured values of the parameter of the device 106 at the remote location 104. The processor 114 at the remote location 104 can then diagnose the device 106 using the obtained measured values of the parameter. The measured values of the parameter or diagnostics performed on the measured values can be shown at display 148 or stored to the memory storage device 144. In various embodiments, the memory storage device 144 includes a non-transitory storage device, such as a solid-state memory or RAM.

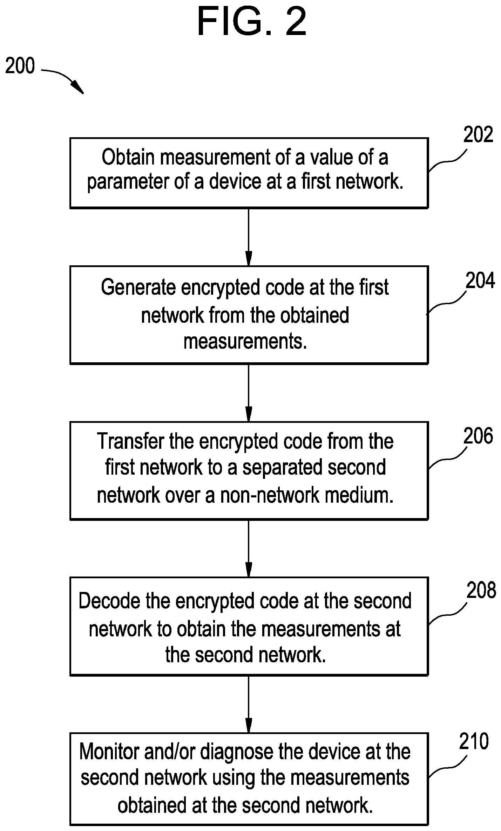

Figure 2 shows a flowchart 200 illustrating a method of remote monitoring and diagnosis of a device. In block 202, data is obtained from a sensor that is coupled to the device. The sensor is coupled to a first network. In block 204, the data is encrypted to generate an encrypted code at an interface of the first network. In block 206, a detector of the second network is used to read the encrypted code from the interface. The data is therefore transferred from the first network to the second network without the use of a network connection or, in other words, over a non-network medium such as an air gap. In block 208, the encrypted code is decoded at the second network. Finally in block 210, the decoded data is used at the second network to diagnose the device.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of remotely monitoring and diagnosing a device (106), comprising:
obtaining data from a sensor (108) disposed on the device (106) at a first network (102);
encrypting the data to generate an encrypted code (160) at the first network (102) at a selected sampling rate;
generating a signal comprising the encrypted code (160) at an interface (120) wherein the encrypted code (160) is refreshed at the interface (120) at a selected refresh rate;
obtaining a copy (161) of the encrypted code (160) at a detector (122) separated from the first network (110) via a non-network medium (150), the transmission of the encoded data occurring with communication over the non-network medium (150) in only one direction so that data is not transmittable from a second network to the first network,
transmitting the copy (161) of the encrypted code (160) from the detector (122) to the second network (104) via a secure tunnel network connection (136),
decoding the copy (161) of the encrypted code (160) to obtain a copy of the data at the second network (104) separate from the first network (102); and
monitoring and diagnosing of the device (106) at the second network (104) using the copy of the data.

2. The method of claim 1, further comprising displaying the encrypted code (160) as a visual signal at a visual interface (120) of the first network (102) and reading the visual signal from the visual interface (120) via an optical scanner (122).

3. The method of claim 2, wherein the visual signal is a QR code.

4. The method of claim 1, further comprising generating an audio signal relating to the encrypted code at an audio transmitter of the first network (102) and receiving the audio signal at an audio receiver.

5. The method of any preceding claim, further comprising generating the encrypted code (160) dynamically at a selected refresh rate.

6. The method of any preceding claim, further comprising obtaining the copy of the data using at least one of: (i) a device having a continuous network connection to the second network; (ii) a device having a non-continuous connection to the second network; (iii) a tablet; (iv) a smartphone; (v) an optical scanner; (vi) an acoustic receiver; and (vi) a hand-held device.

7. A system for remotely monitoring and diagnosing a device (106), comprising:
a first network (102) comprising
a processor coupled to a sensor (108) configured to obtain a measurement of a parameter of the device (106) and generate an encrypted code (160) from the obtained measurement at a selected sampling rate; and
an interface (120) configured to generate a signal comprising the encrypted code (160) wherein encrypted code (160) is refreshed at the interface (120) at a selected refresh rate; and
a second network (104) separate from the first network (102), the second network comprising
a detector (122) separated from the interface (120) by a non-network medium (150) and configured to receive the signal from the interface (120) over the non-network medium (150), the transmission of the encoded data occurring with communication over the non-network medium (150) in only one direction so that data is not transmittable from the second network to the first network; and
a diagnostic unit (140) of the second network (104) configured to obtain a copy (161) of the encrypted code (160) from the detector (122) via a secure tunnel network connection (136), wherein the diagnostic unit (140) is configured to decode the copy (161) of the encrypted code (160) to monitor and diagnose the device (106).

8. The system of claim 7, wherein the interface (120) is configured to visually display the encrypted code (160) and the detector (122) is configured to obtain an image copy of the encrypted code (160).

9. The system of claim 7, wherein the interface (120) comprises an audio generator configured to generate an audio signal corresponding to the encrypted code (160) and the detector (122) comprises an audio receiver configured to receive the audio signal generated at the audio generator.

10. The system of any of claims 7 to 9, wherein the first network (102) is a private network.

11. The system of any of claims 7 to 10, wherein the detector (122) further comprises at least one of: (i) a detector having a continuous network connection to the second network; (ii) a detector having a non-continuous network connection to the second network; (iii) a tablet; (iv) a smartphone; (v) an optical scanner; (vi) an audio receiver; and (vi) a hand-held device.

## Patentansprüche

1. Verfahren zur Fernüberwachung und -diagnose einer Vorrichtung (106), umfassend:
Erhalten von Daten von einem Sensor (108), der an der Vorrichtung (106) in einem ersten Netzwerk (102) angeordnet ist;
Verschlüsseln der Daten, um einen verschlüsselten Code (160) in dem ersten Netzwerk (102) mit einer gewählten Abtastrate zu erzeugen;
Erzeugen eines den verschlüsselten Code (160) umfassenden Signals an einer Schnittstelle (120), wobei der verschlüsselte Code (160) an der Schnittstelle (120) mit einer gewählten Aktualisierungsrate aktualisiert wird;
Erhalten einer Kopie (161) des verschlüsselten Codes (160) an einem Detektor (122), der von dem ersten Netzwerk (110) über ein Nicht-Netzwerkmedium (150) getrennt ist, wobei das Übertragen der verschlüsselten Daten bei der Kommunikation über das Nicht-Netzwerkmedium (150) in nur einer Richtung erfolgt, sodass die Daten nicht von einem zweiten Netzwerk an das erste Netzwerk übertragbar sind,
Übertragen der Kopie (161) des verschlüsselten Codes (160) von dem Detektor (122) an das zweite Netzwerk (104) über eine sichere Tunnel-Netzwerkverbindung (136),
Decodieren der Kopie (161) des verschlüsselten Codes (160), um eine Kopie der Daten in dem zweiten Netzwerk (104) getrennt von dem ersten Netzwerk (102) zu erhalten; und
Überwachen und Diagnostizieren der Vorrichtung (106) in dem zweiten Netzwerk (104) unter Verwendung der Kopie der Daten.

2. Verfahren nach Anspruch 1, ferner umfassend das Anzeigen des verschlüsselten Codes (160) als ein visuelles Signal an einer visuellen Schnittstelle (120) des ersten Netzwerks (102) und das Lesen des visuellen Signals von der visuellen Schnittstelle (120) über einen optischen Scanner (122).

3. Verfahren nach Anspruch 2, wobei das visuelle Signal ein QR-Code ist.

4. Verfahren nach Anspruch 1, ferner umfassend das Erzeugen eines Audiosignals, das sich auf den verschlüsselten Code bezieht, an einem Audiosender des ersten Netzwerks (102) und das Empfangen des Audiosignals an einem Audioempfänger.

5. Verfahren nach einem der vorstehenden Ansprüche, ferner umfassend das dynamische Erzeugen des verschlüsselten Codes (160) mit einer gewählten Aktualisierungsrate.

6. Verfahren nach einem der vorstehenden Ansprüche, ferner umfassend das Erhalten der Kopie der Daten unter Verwendung von mindestens einem von: (i) einer Vorrichtung mit einer kontinuierlichen Netzwerkverbindung an das zweite Netzwerk; (ii) einer Vorrichtung mit einer nicht kontinuierlichen Verbindung an das zweite Netzwerk; (iii) einem Tablet; (iv) einem Smartphone; (v) einem optischer Scanner; (vi) einem akustischen Empfänger; und (vi) einer Handheld-Vorrichtung.

7. System zur Fernüberwachung und -diagnose einer Vorrichtung (106), umfassend:
ein erstes Netzwerk (102), umfassend
einen Prozessor, der mit einem Sensor (108) gekoppelt ist, der dafür konfiguriert ist, eine Messung eines Parameters der Vorrichtung (106) zu erhalten und einen verschlüsselten Code (160) aus der erhaltenen Messung mit einer gewählten Abtastrate zu erzeugen; und
eine Schnittstelle (120), die dafür konfiguriert ist, ein Signal zu erzeugen, das den verschlüsselten Code (160) umfasst, wobei der verschlüsselte Code (160) an der Schnittstelle (120) mit einer gewählten Aktualisierungsrate aktualisiert wird; und
ein zweites Netzwerk (104), das von dem ersten Netzwerk (102) getrennt ist, wobei das zweite Netzwerk umfasst
einen Detektor (122), der von der Schnittstelle (120) durch ein Nicht-Netzwerkmedium (150) getrennt ist und dafür konfiguriert ist, das Signal von der Schnittstelle (120) über das Nicht-Netzwerkmedium (150) zu empfangen, wobei das Übertragen der kodierten Daten bei der Kommunikation über das Nicht-Netzwerkmedium (150) in nur einer Richtung erfolgt, so dass die Daten nicht von dem zweiten Netzwerk zu dem ersten Netzwerk übertragbar sind; und
eine Diagnoseeinheit (140) des zweiten Netzwerks (104), die dafür konfiguriert ist, eine Kopie (161) des verschlüsselten Codes (160) von dem Detektor (122) über eine sichere Tunnel-Netzwerkverbindung (136) zu erhalten, wobei die Diagnoseeinheit (140) dafür konfiguriert ist, die Kopie (161) des verschlüsselten Codes (160) zum Überwachen und Diagnostizieren der Vorrichtung (106) zu dekodieren.

8. System nach Anspruch 7, wobei die Schnittstelle (120) dafür konfiguriert ist, den verschlüsselten Code (160) visuell anzuzeigen, und der Detektor (122) dafür konfiguriert ist, eine Bildkopie des verschlüsselten Codes (160) zu erhalten.

9. System nach Anspruch 7, wobei die Schnittstelle (120) einen Audiogenerator umfasst, der dafür konfiguriert ist, ein dem verschlüsselten Code (160) entsprechendes Audiosignal zu erzeugen, und der Detektor (122) einen Audioempfänger umfasst, der dafür konfiguriert ist, das am Audiogenerator erzeugte Audiosignal zu empfangen.

10. System nach einem der Ansprüche 7 bis 9, wobei das erste Netzwerk (102) ein privates Netzwerk ist.

11. System nach einem der Ansprüche 7 bis 10, wobei der Detektor (122) ferner mindestens eines umfasst von: (i) einem Detektor mit einer kontinuierlichen Netzwerkverbindung zum zweiten Netzwerk; (ii) einem Detektor mit einer nicht kontinuierlichen Netzwerkverbindung zum zweiten Netzwerk; (iii) einem Tablet; (iv) einem Smartphone; (v) einem optischer Scanner; (vi) einem Audioempfänger; und (vi) einer Handheld-Vorrichtung.

## Revendications

1. Procédé de surveillance et de diagnostic à distance d'un dispositif (106), comprenant :
l'obtention de données à partir d'un capteur (108) disposé sur le dispositif (106) au niveau d'un premier réseau (102) ;
le chiffrement des données pour générer un code chiffré (160) au niveau du premier réseau (102) à une fréquence d'échantillonnage sélectionnée ;
la génération d'un signal comprenant le code chiffré (160) au niveau d'une interface (120), où le code chiffré (160) est rafraîchi au niveau de l'interface (120) à une fréquence de rafraîchissement sélectionnée ;
l'obtention d'une copie (161) du code chiffré (160) au niveau d'un détecteur (122) séparé du premier réseau (110) par l'intermédiaire d'un support hors réseau (150), la transmission des données codées se produisant avec une communication sur le support hors réseau (150) dans une seule direction de sorte que les données ne sont pas transmissibles d'un second réseau au premier réseau,
la transmission de la copie (161) du code chiffré (160) du détecteur (122) au second réseau (104) par l'intermédiaire d'une connexion réseau de tunnel sécurisé (136) ;
le décodage de la copie (161) du code chiffré (160) pour obtenir une copie des données au niveau du second réseau (104) séparé du premier réseau (102) ; et
la surveillance et le diagnostic du dispositif (106) au niveau du second réseau (104) à l'aide de la copie des données.

2. Procédé selon la revendication 1, comprenant en outre l'affichage du code chiffré (160) sous la forme d'un signal visuel au niveau d'une interface visuelle (120) du premier réseau (102) et la lecture du signal visuel à partir de l'interface visuelle (120) par l'intermédiaire d'un lecteur optique (122).

3. Procédé selon la revendication 2, dans lequel le signal visuel est un code QR.

4. Procédé selon la revendication 1, comprenant en outre la génération d'un signal audio concernant le code chiffré vers un émetteur audio du premier réseau (102) et la réception du signal audio au niveau d'un récepteur audio.

5. Procédé selon l'une quelconque des revendications précédentes, comprenant en outre la génération du code chiffré (160) de façon dynamique à une fréquence de rafraîchissement sélectionnée.

6. Procédé selon l'une quelconque des revendications précédentes, comprenant en outre l'obtention de la copie des données à l'aide d'au moins l'un parmi : (i) un dispositif ayant une connexion réseau continue au second réseau ; (ii) un dispositif ayant une connexion non continue au second réseau ; (iii) une tablette ; (iv) un téléphone intelligent ; (v) un lecteur optique ; (vi) un récepteur acoustique ; et (vi) un dispositif portatif.

7. Système de surveillance et de diagnostic à distance d'un dispositif (106), comprenant :
un premier réseau (102) comprenant
un processeur couplé à un capteur (108) configuré pour obtenir une mesure d'un paramètre du dispositif (106) et générer un code chiffré (160) à partir de la mesure obtenue à une fréquence d'échantillonnage sélectionnée ; et
une interface (120) configurée pour générer un signal comprenant le code chiffré (160) dans laquelle le code chiffré (160) est rafraîchi au niveau de l'interface (120) à une fréquence de rafraîchissement sélectionnée ; et
un second réseau (104) séparé du premier réseau (102), le second réseau comprenant
un détecteur (122) séparé de l'interface (120) par un support hors réseau (150) et configuré pour recevoir le signal provenant de l'interface (120) sur le support hors réseau (150), la transmission des données codées se produisant avec une communication sur le support hors réseau (150) dans une seule direction de sorte que les données ne sont pas transmissibles du second réseau au premier réseau ; et
une unité de diagnostic (140) du second réseau (104) configurée pour obtenir une copie (161) du code chiffré (160) à partir du détecteur (122) par l'intermédiaire d'une connexion réseau de tunnel sécurisé (136), dans laquelle l'unité de diagnostic (140) est configurée pour décoder la copie (161) du code chiffré (160) pour surveiller et diagnostiquer le dispositif (106).

8. Système selon la revendication 7, dans lequel l'interface (120) est configurée pour afficher visuellement le code chiffré (160) et le détecteur (122) est configuré pour obtenir une copie d'image du code chiffré (160).

9. Système selon la revendication 7, dans lequel l'interface (120) comprend un générateur audio configuré pour générer un signal audio correspondant au code chiffré (160) et le détecteur (122) comprend un récepteur audio configuré pour recevoir le signal audio généré au niveau du générateur audio.

10. Système selon l'une quelconque des revendications 7 à 9, dans lequel le premier réseau (102) est un réseau privé.

11. Système selon l'une quelconque des revendications 7 à 10, dans lequel le détecteur (122) comprend en outre au moins l'un parmi : (i) un détecteur ayant une connexion réseau continue au second réseau ; (ii) un détecteur ayant une connexion réseau non continue au second réseau ; (iii) une tablette ; (iv) un téléphone intelligent ; (v) un lecteur optique ; (vi) un récepteur audio ; et (vi) un dispositif portatif.
